Europäisches Patentamt

European Patent Office

Office européen des brevets

(19)

(11) Veröffentlichungsnummer: **0 010 594 B1**

(12) **EUROPÄISCHE PATENTSCHRIFT**

(45) Veröffentlichungstag der Patentschrift: ·
09.02.83

(21) Anmeldenummer: **79103325.1**

(22) Anmeldetag: **07.09.79**

(51) Int. Cl.³: **B 62 D 1/18,** F 16 D 3/12

(54) **Drehelastische Kupplung, insbesondere Lenksäulenkupplung für Kraftfahrzeuge.**

(30) Priorität: **02.11.78 DE 2847541**

(43) Veröffentlichungstag der Anmeldung:
**14.05.80 Patentblatt 80/10**

(45) Bekanntmachung des Hinweises auf die Patenterteilung:
**09.02.83 Patentblatt 83/6**

(84) Benannte Vertragsstaaten:
**BE FR GB IT NL SE**

(56) Entgegenhaltungen:
**DE-U-1 863 471**
**FR-A-2 374 554**

(73) Patentinhaber: **Boge GmbH, Bogestrasse 50,
D-5208 Eitorf/Sieg (DE)**

(72) Erfinder: **Hüsch, Bruno, Himmelsberger Str. 159,
D-5483 Bad Neuenahr/Ahrweiler (DE)**

## Drehelastische Kupplung, insbesondere Lenksäulenkupplung für Kraftfahrzeuge

Die Erfindung betrifft eine drehelastische Kupplung zur Verbindung zweier im wesentlichen fluchtend zueinander angeordneten, Drehmomente übertragende Wellen, insbesondere Lenksäulenkupplungen für Kraftfahrzeuge zur Anordnung zwischen Lenkgetriebe und Lenksäule mit einer äußeren Metallhülse, einem koaxial im Abstand zu dieser angeordneten, metallischen Innenrohr und einem mit der Metallhülse und dem Innenrohr haftend verbundenen, den Zwischenraum ausfüllenden Gummiteil, wobei die Metallhülse über einen Teil ihrer Länge mit gegenüberliegenden, axial verlaufenden Schlitzen versehen ist, die Anschläge für radial vom Innenrohr in die Schlitze hinein sich erstreckende Stege bilden.

Eine derartige Kupplung ist in der FR-A-2 374 554 gezeigt, wobei zwischen einer Metallhülse und einem Innenrohr ein Elastomerelement angeordnet ist, welches mit den Metallteilen über radiale Verspannung verbunden ist. An einer Seite ist die Metallhülse mit gegenüberliegenden axial verlaufenden Schlitzen versehen, deren Axialränder als Anschläge für radial in die Schlitze hineinragende Stege dienen, die an einem am Innenrohr befestigten Ring angeformt sind. Ungünstig sind die metallisch harten Anschläge, so daß bei weicher Auslegung des Elastomerelements die Gefahr besteht, daß die Stege mit den Anschlägen in Kontakt geraten und daß Klappergeräusche, Lenkradschlagen und unpräzise Lenkübertragung auftreten. Bei harter Auslegung des Elastomerelements werden Schwingungen nicht mehr in der gewünschten Weise gedämpft.

Des weiteren ist aus der DE-U-1 863 471 eine aus Blechteilen geformte Kupplung bekannt, die für Schaltgestänge verwendet wird. Es sind jedoch keine Drehmomente zu übertragen, sondern Axialkräfte und Biegemomente. Da die Innenränder der Metallhülse nach innen umgebördelt sind, bilden sie Anschläge für die Übertragung der vorgenannten Kräfte. Durch die gewählte Geometrie der Anschläge ist jedoch lediglich eine Linienberührung zwischen den Teilen gegeben, so daß nur geringe Kräfte und Momente übertragen werden können. An Lenksäulenkupplungen wären solche Anschläge jedoch völlig unzureichend.

Der Erfindung liegt die Aufgabe zugrunde, die Kupplung der eingangs genannten Art so auszubilden, daß trotz guter Schwingungsdämpfung Klappergeräusche und Lenkradschlagen vermieden werden.

Die Aufgabe wird erfindungsgemäß dadurch gelöst, daß die Metallhülse aus einem im Querschnitt mehrkantigen Blechteil geformt ist, daß die axialen Ränder der Schlitze nach innen gerichtete und von Gummi umschlossene Umbördelungen aufweisen und daß die Stege am Innenrohr angeformt sind.

Die Ausformung der Metallhülse aus einem Blechteil läßt auf einfache und kostensparende Weise eine für die Lösung der gestellten Aufgabe optimale Formgebung der Metallhülse zu. Es wird eine formschlüssige Verbindung zwischen dem Gummielement und der Metallhülse erzielt, die auch bei fehlender Vulkanisierung nicht verloren gehen wird. Auch läßt sich mit dieser Formgebung die Federkennlinie in progressivem Sinne beeinflussen.

Um eine einfache Verbindung der drehelastischen Kupplung der Erfindung mit einem trichterförmig erweiterten Lenkstangenrohr zu ermöglichen, ist in der bevorzugten Anwendung der Erfindung vorgeschlagen, daß die Metallhülse aus zwei Halbschalen besteht, die unter Belassung mindestens eines axialen Spaltes mit dem Gummi unter hoher radialer Verspannung verbunden ist. Durch den Zwischenraum zwischen den beiden Halbschalen kann die Kupplung dann unter hoher Vorspannung in das erweiterte Lenksäulenrohr eingepreßt werden und ist aufgrund seines Profils gegen Verdrehung zum Lenkstangenrohr geschützt. Die Herstellung vereinfacht sich durch die Ausbildung der äußeren Metallhülse in Form zweier Halbschalen weiter.

Die Verdrehkennung bei dieser Ausführungsform kann je nach Ausbildung des Verdrehanschlages am äußeren Metallrohr und der formgebung der Gummiauflage am Anschlag ausgebildet sein, um verschiedene Kennlinien zu erhalten. Hierzu können die Umbördelungen radial ausgerichtet sein.

Ebenfalls im Sinne der Erleichterung der Herstellung ist vorgeschlagen, das Innenrohr über einen Teil seiner Länge aufzuweiten und die Aufweitung zur Ausbildung von Anschlagvorsprüngen sodann zusammenzudrücken. Das Zusammendrücken der Aufweitung kann unter Belassung eines Abstandes der Schenkel der Stege zueinander durchgeführt werden, womit in vorteilhafter Weise der gewünschte ca. 3°-Anschlag herstellbar ist.

Darüber hinaus hat sich als vorteilhaft erwiesen, die Umbördelungen derart auszubilden, daß die Drehelastizität der Kupplung bis etwa 3° Ausschlag aus der 0-Stellung erhalten bleibt.

Bei einem Einbau der erfindungsgemäßen drehelastischen Kupplung in die Lenkwelle eines Kraftfahrzeuges wird nur ein sehr geringer Bauraum benötigt. Bei auftretenden Straßenunebenheiten im Betrieb des Kraftfahrzeuges ergeben sich Erschütterungen, deren Übertragung vom Lenkgetriebe in die Lenksäule durch die weiche Grundkennung verhindert wird. Die Kupplung der Erfindung weist eine verhältnismäßig geringe Verdrehsteifigkeit auf, die bei Geradeausfahrt bis zu einem ca. 3°-Ausschlag der Anschläge des Innenrohres erhalten bleibt. Bei einer Kurvenfahrt verhält sich in dem daran anschließenden Verdrehbereich die Kupplung progressiv drehhart aufgrund des Anschlages der Anschlagmittel zwischen Innenrohr und Außenrohr nach der erwähnten ca. 3°-Verdrehung.

Weitere Einzelheiten, Merkmale und Vorteile des Gegenstandes der Erfindung ergeben sich aus der nachfolgenden Beschreibung der zugehörigen Zeichnung, in der bevorzugte Ausführungsformen der erfindungsgemäßen drehelastischen Kupplung schematisch dargestellt sind. In der Zeichnung zeigt

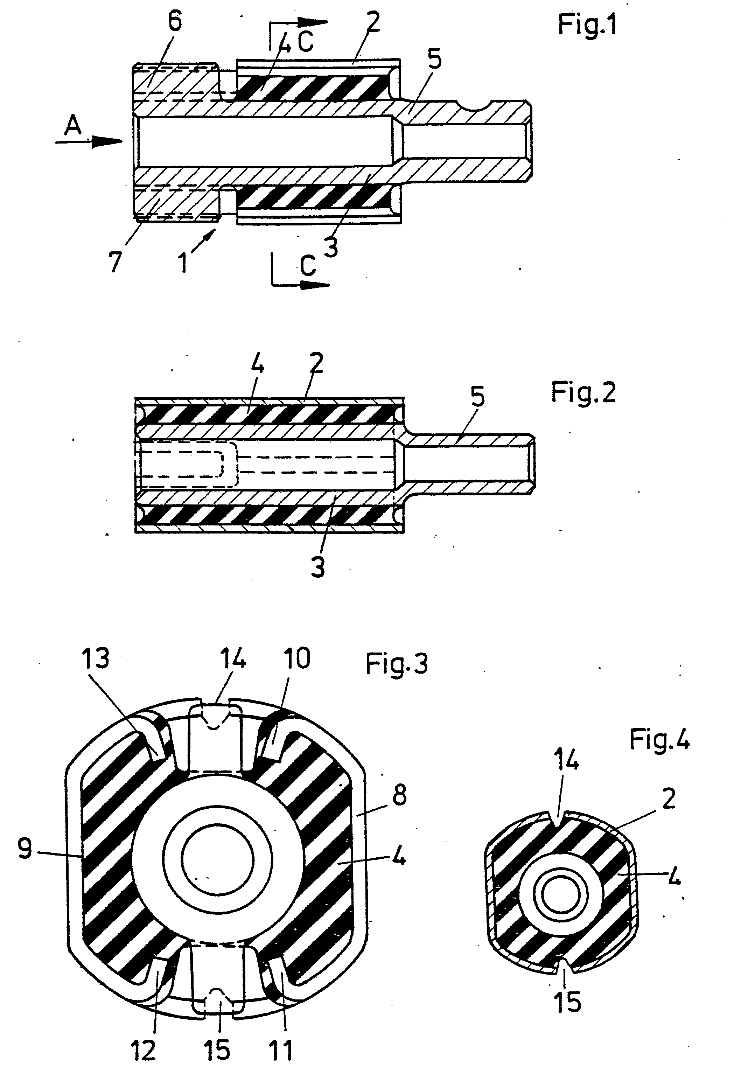

Fig. 1 einen Längsschnitt durch eine drehelastische Kupplung,

Fig. 2 einen Längsschnitt durch die drehelastische Kupplung der Fig. 1 in einer um 90° versetzten Ebene,

Fig. 3 eine Ansicht des gemäß Pfeil »A« der Fig. 1,

Fig. 4 einen Schnitt gemäß Linie C-C der Fig. 1,

Fig. 5 eine Draufsicht auf eine Halbschale der äußeren Metallhülse der Kupplung der Fig. 1,

Fig. 6 eine Seitenansicht der Halbschale der Fig. 5,

Fig. 7 eine Stirnseitenansicht der Halbschale der Fig. 5,

Fig. 8 eine andere Ausführungsform einer Kupplung im Längsschnitt,

Fig. 9 einen um 90° versetzten Längsschnitt der Kupplung der Fig. 8,

Fig. 10 eine Ansicht gemäß Pfeil »A« der Fig. 8,

Fig. 11 eine Stirnseitenansicht des Innenrohres der Kupplung der Fig. 8 und

Fig. 12 eine geänderte Ausführungsform des Innenrohres.

Sämtliche in der Zeichnung dargestellten drehelastischen Kupplungen sind zum Einbau in die Lenksäulen von Kraftfahrzeugen vorgesehen und geeignet. Zu diesem Zweck ist zwischen Lenkgetriebe und Lenksäule ein Lenksäulenelement trichterförmig aufgeweitet und mit mehreckigem Querschnitt versehen. In dem derart erweiterten Hohlraum ist die elastische Kupplung in ihrer Gesamtheit unter Vorspannung einschiebbar und darin verdrehsicher gehalten. Aus dem erwähnten trichterförmig aufgeweiteten Teil der Lenksäule ragt dann der vorstehende Teil des Innenrohres heraus, der zur Verbindung beispielsweise mit einem Kreuzgelenk mit einer Verzahnung oder dgl. versehen ist.

Die eigentliche elastische Kupplung besteht aus einem Gummi-Metall-Element 1, welches in seinen Teilen koaxial aufgebaut ist und aus einer äußeren Metallhülse 2, einem koaxial mit Abstand zu dieser angeordneten metallischen Innenrohr 3 und einem Gummiteil 4 besteht, welches mit der Innenfläche der Metallhülse 2 und der Außenfläche des Innenrohres 3 haftend verbunden ist.

Das Innenrohr 3 weist auf seiner in der Zeichnung rechten Seite ein über das Gummiteil 4 bzw. die äußere Metallhülse 2 vorstehendes Ende 5 auf, welches zur Verbindung mit einem Lenksäulenteil geeignet ausgebildet ist. Auf der in der Zeichnung linken Seite ist das Innenrohr oben und unten, einander diametral gegenüberliegend mit flachen, radial nach außen sich erstreckenden Flügeln 6, 7 versehen, die als Anschlagmittel dienen.

Die äußere Metallhülse 2 ist in ihrer Gesamtheit aus zwei Halbschalen 8, 9 zusammengesetzt, die aus Blech geprägt sind. Jede Halbschale 8 oder 9 ist über einen Teil ihrer Länge, der in etwa dem der Längserstreckung der Flügel 6, 7 entspricht, radial nach innen umgebördelt. Die Umbördelungen weisen die Bezugsziffern 10, 11, 12, 13 in Fig. 13 der Zeichnung auf.

Die beiden Halbschalen 8, 9, die die äußere Metallhülse 2 bilden, sind unter Belassung eines oberen und eines unteren axialen Spalts 14, 15 haftend mit dem Gummiteil 4 verbunden. Dabei erstreckt sich in den durch die Umbördelungen 10/13 bzw. 11/12 freigelassenen Bereich jeweils ein Flügel 6 bzw. 7 des Innenrohres 3. Die Flügel 6, 7 sind von Gummi V-förmig freigehalten, die Umbördelungen 10 bis 13 jedoch von Gummi umschlossen. Durch die Kombination dieser Merkmale ist eine geringe Verdrehsteifigkeit der Kupplung über einen Ausschlag von 3° erreicht.

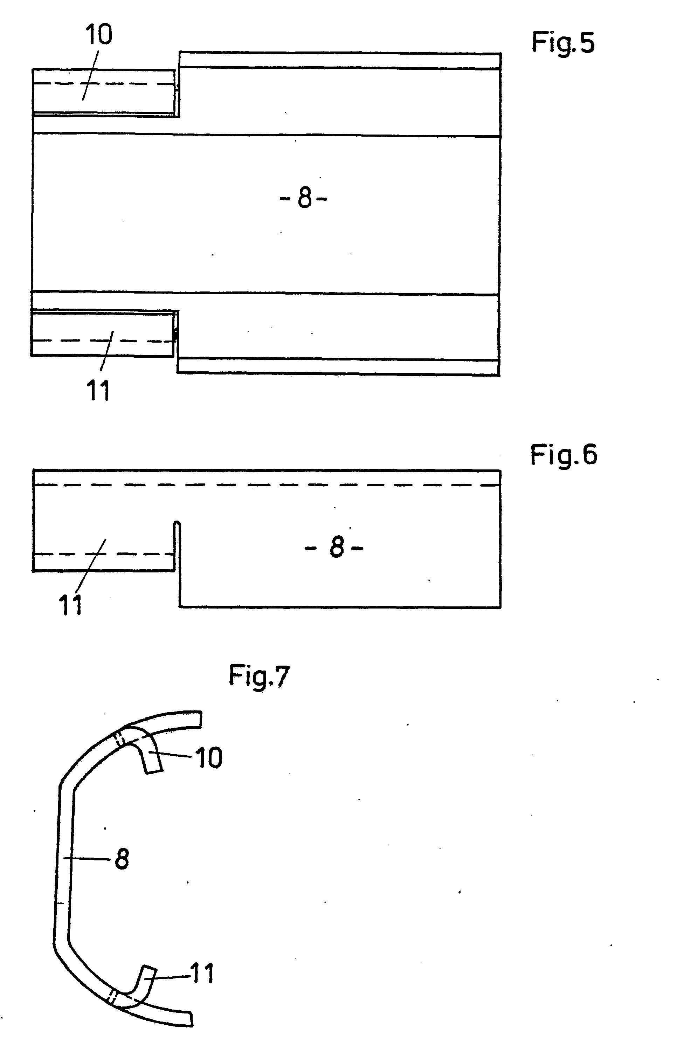

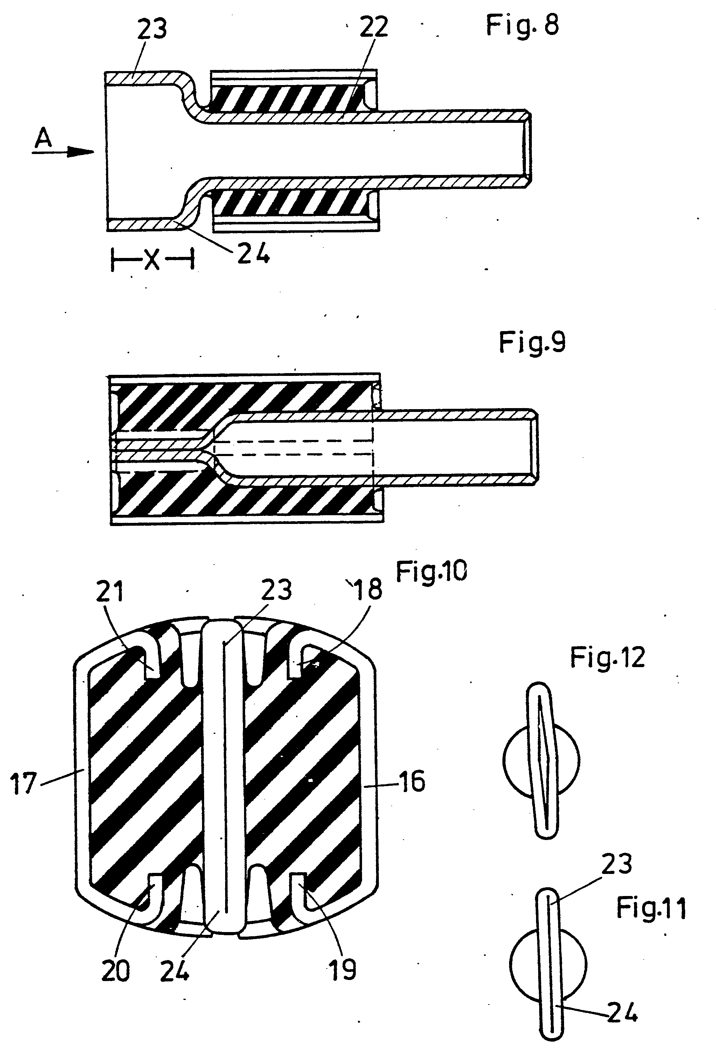

Den Fig. 5, 6 und 7 ist die genaue Ausbildung einer Halbschale 8 oder 9 gemäß obiger Beschreibung entnehmbar. Dem gegenüber ist die Ausbildungsform der zur Erstellung der äußeren Metallhülse verwendeten Halbschalen 16 und 17 der Fig. 9 der Zeichnung, welche eine abgeänderte drehelastische Kupplung betrifft, dadurch verändert, daß ihre Umbördelungen 18, 19, 20, 21 nicht radial, sondern gegeneinander gerichtet verlaufen. Hierin ist ein Mittel zu sehen, die Verdrehkennung zwecks Erzielung einer anderen Kennlinie der drehelastischen Kupplung zu beeinflussen.

Im übrigen ist die drehelastische Kupplung der Fig. 8, 9, 10 und 11 gegenüber der vorbeschriebenen dadurch vereinfacht, daß ein Innenrohr 22 Verwendung findet, welches über den Teil »X« seiner Länge radial aufgeweitet ist und anschließend flach zur Ausbildung von Anschlagvorsprüngen 23, 24 zusammengedrückt ist. Eine besonders einfache Herstellung wird hiermit erreicht.

Gemäß Fig. 12 der Zeichnung ist es möglich, den Vorgang des Zusammenpressens abzubrechen, wenn noch ein Abstand der Schenkel der Vorsprünge zueinander vorliegt. In dieser Weise ist es möglich, den gewünschten Flankenverlauf von etwa 3° herzustellen.

**Patentansprüche**

1. Drehelastische Kupplung zur Verbindung zweier im wesentlichen fluchtend zueinander angeordneten, Drehmomente übertragende Wellen, insbesondere Lenksäulenkupplung für Kraftfahrzeuge zur Anordnung zwischen Lenkgetriebe und Lenksäule, mit einer äußeren Metallhülse (2), einem koaxial im Abstand zu dieser angeordneten, metallischen Innenrohr (3) und einem mit der Metallhülse (2) und dem Innenrohr (3) haftend verbundenen, den Zwischenraum ausfüllenden Gummiteil (4), wobei die Metallhülse (2) über einen Teil ihrer Länge (X) mit gegenüberliegenden, axial verlaufenden Schlitzen versehen ist, die Anschläge für radial vom Innenrohr (3) in die Schlitze hinein sich erstreckende Stege (6, 7; 23, 24) bilden, dadurch gekennzeichnet, daß die Metallhülse (2) aus einem im Querschnitt mehrkantigen Blechteil geformt ist, daß die axialen Ränder der Schlitze nach innen gerichtete und von Gummi umschlossene Umbördelungen (10, 11, 12, 13; 18, 19, 20, 21) aufweisen und daß die Stege (6, 7; 23, 24) am Innenrohr (3) angeformt sind.

2. Kupplung nach Anspruch 1, dadurch gekennzeichnet, daß die Metallhülse (2) aus zwei Halbschalen (8, 9; 17) besteht, die unter Belassung mindestens eines axialen Spaltes (14, 15) mit dem Gummi unter hoher radialer Verspannung verbunden ist.

3. Kupplung nach Anspruch 1 oder 2, dadurch gekennzeichnet, daß die Umbördelungen (10, 11, 12, 13) radial ausgerichtet sind.

4. Kupplung nach einem der Ansprüche 1 bis 3, dadurch gekennzeichnet, daß das Innenrohr (22) über einen Teil (X) seiner Länge aufgeweitet und die Aufweitung zur Ausbildung von Anschlagvorsprüngen (23, 24) zusammengedrückt ist.

5. Kupplung nach Anspruch 4, dadurch gekennzeichnet, daß das Zusammendrücken unter Belassung eines Abstandes der Schenkel der Stege (23, 24) zueinander durchgeführt ist.

6. Kupplung nach einem der Ansprüche 1 bis 5, dadurch gekennzeichnet, daß die Umbördelungen (10, 11, 12, 13; 18, 19, 20, 21) derart ausgebildet sind, daß die Drehelastizität der Kupplung bis etwa 3° Ausschlag aus der Nullstellung erhalten bleibt.

## Claims

1. Rotary resilient coupling for connecting two substantially co-axial torque-transmitting shafts, especially a steering column coupling for motor vehicles for disposition between the steering gear and the steering column, with an outer metallic sleeve (2), a co-axial metallic inner tube (3) spaced form the outer sleeve and a rubber component (4) adhesively bonded to the sleeve (2) and the inner tube (3) and filling the space between, the metallic sleeve (2) being provided over a part of its length (X) with opposed axially extending slots, which form stops for lugs (6, 7; 23, 24) projecting radially from the inner tube (3) into the slots, characterised in that, the metallic sleeve (2) is formed from a sheet metal component which is multi-edged in cross section, that the axially extending edges of the slots are turned inwards and have flanges (10, 11, 12, 13; 18, 19, 20, 21) embedded in rubber and that the lugs (6, 7; 23, 24) are formed on the inner tube (3).

2. Coupling according to Claim 1, characterised in that, the metal sleeve (2) comprises two half shells (8, 9; 17) and is conneted to the rubber under hight radial stress leaving at least one axially extending gap (14, 15).

3. Coupling according to Claim 1 or 2, characterised in that, the flanges (10, 11, 12, 13) are directed radially.

4. Coupling according to one of Claims 1 to 3, characterised in that, the inner tube (22) is widened out over part (X) of its lenght and the widened portion is squashed to form stop projections (23, 24).

5. Coupling according to Claim 4, characerised in that, the squashing is performed in a manner which leaves a gap between the limbs of the lugs (23, 24).

6. Coupling according to one of Claims 1 to 5, characterised in that, the flanges (10, 11, 12, 13; 18, 19, 20, 21) are formed in such a way that the torsional resilience of the coupling is maintained up to about 3° excursion from the neutral position.

## Revendications

1. Accouplement flexible pour la jonction de deux arbres, disposés de façon à s'aligner sensiblement l'un avec l'autre, transmettant des moments de rotation, en particulier accouplement de la colonne de direction de véhicules automibiles destiné à être placé entre le mécanisme de direction et la colonne de direction, comportant une douille métallique extérieure (2), un tube métallique intérieur (3) disposé coaxialement à une certaine distance de cette douille, et une pièce en caoutchouc, (4) reliée par adhérence avec la douille métallique (2) et le tube intérieur (3), et qui remplit l'espace intermédiaire, la couille métallique (2) étant pourvue, sur une partie de sa longuer (X) de fentes qui s'étendent axialement placées l'une en face de l'autre, qui forment des butées pour des ailes (6, 7; 23, 24) qui s'étendent radialement à partir du tube intérieur (3) jusque dans les fentes, accouplement caractérisé en ce que la douille métallique (2) est foçonnée à partir d'une pièce en tôle de section polygonale, que les bords axiaux des fentes sont dirigés vers l'intérieur et présentent des bords rabattus (10, 11, 12, 13; 18, 19, 20, 21) enrobés de caoutchouc et que les ailes (6, 7; 23, 24) sont façonnées sur le tube intérieur (3).

2. Acccouplement suivant la revendication 1, caractérisé en ce que la douille métallique (2) est constituée par deux demi-coquilles (8, 9; 17) qui sont relisées, en laissant au moins une fente axiale (14, 15), par le caoutchouc sous une forte tension radiale.

3. Accouplement suivant l'une des revendications 1 et 2, caractérisé e en ce que les bords rabattus (10, 11, 12, 13) sont dirigés radialement.

4. Accouplement suivant l'une quelconque des revendications 1 à 3, caractérisé en ce que le tube intérieur (22) est élargi sur une partie (X) de sa longueur, et que cet élargissement est aplati pour la formation des saillies de butée (23, 24).

5. Accouplement suivant la revendication 4, caractérisé en ce que l'aplatissement est exécuté en laissant une certaine distance entre les joues des ailes (23, 24).

6. Accouplement suivant l'une quelconque des revendications 1 à 5, caractérisé en ce que les bords rabattus (10, 11, 12, 13; 18, 19, 20, 21) sont réalisés de façon telle que l'élasticité à la rotation de l'accouplement reste maintenue jusqu'à une déviation de 3 degrés environ à partir de la position zéro.

0 010 594

Fig.1

Fig.2

Fig.3

Fig.4

Fig. 5

10

- 8 -

11

Fig. 6

- 8 -

11

Fig. 7

10

8

11

Fig. 8

23    22

A →

⊢—X—⊣    24

Fig.9

Fig.10

21    23    18

Fig.12

17    16

20    24    19

23

Fig.11

24